# EUROPÄISCHE PATENTSCHRIFT

(11) **EP 1 624 153 B1**
(45) Veröffentlichungstag und Bekanntmachung des Hinweises auf die Patenterteilung: **16.04.2008**
(21) Anmeldenummer: 04018549.8
(22) Anmeldetag: 05.08.2004
(51) Int. Cl.: E21B 47/01, E21D 9/00

(54) **Verfahren zur Bestimmung von Bodeneigenschaften**
Method for determining soil properties
Procédé pour déterminer des propriétés d'un sol

(43) Veröffentlichungstag der Anmeldung: 08.02.2006
(73) Patentinhaber: Hochtief Construction AG, 45128 Essen (DE)
(72) Erfinder: Senz, Franz-Josef, 50171 Kerpen (DE)
(74) Vertreter: Rohmann, Michael

(56) Entgegenhaltungen:
- EP-A- 0 466 384
- EP-A- 1 001 134
- US-A- 4 128 011
- US-A- 4 380 930
- PATENT ABSTRACTS OF JAPAN Bd. 0153, Nr. 96 (M-1166), 8. Oktober 1991 (1991-10-08) & JP 3 161696 A (HITACHI ZOSEN CORP), 11. Juli 1991 (1991-07-11)
- PATENT ABSTRACTS OF JAPAN Bd. 1998, Nr. 07, 31. März 1998 (1998-03-31) & JP 7 280946 A (AMBERG MEASURING TECHNIK LTD; FUJI BUSSAN KK), 27. Oktober 1995 (1995-10-27)
- PATENT ABSTRACTS OF JAPAN Bd. 1999, Nr. 12, 29. Oktober 1999 (1999-10-29) & JP 11 182171 A (KAJIMA CORP), 6. Juli 1999 (1999-07-06)

## Beschreibung

Die Erfindung betrifft ein Verfahren zur Bestimmung von Bodeneigenschaften im Zuge der Erstellung von unterirdischen Bauwerken, insbesondere im Zuge der Erstellung von Tunnelröhren. - Die Erfindung bezieht sich auf die geologische Vorauserkundung von Böden, in denen ein unterirdisches Bauwerk erstellt werden soll. Bei dem unterirdischen Bauwerk handelt es sich vorzugsweise um ein langgestrecktes röhrenartiges unterirdisches Bauwerk. Unterirdisches Bauwerk meint insbesondere einen Tunnel oder eine unterirdische Rohrleitung. Bodeneigenschaften meint im Rahmen der Erfindung insbesondere die Bodenart und/oder die Lagerungsdichte des Bodens bzw. des Erdreichs und/oder die Festigkeit des Gesteins.

Aus der Praxis ist es bekannt, im Zuge der Erstellung von unterirdischen Röhren die Bodeneigenschaften durch einzelne Erkundungsbohrungen zu bestimmen. Vor allem in heterogenem Gebirge ist diese Art der geologischen Vorauserkundung nicht zufriedenstellend, weil lediglich stichpunktartige Informationen über die Bodeneigenschaften erhalten werden können. Bei solchen geologischen Vorauserkundungen können aufgrund der stark wechselnden Bodeneigenschaften bzw. Baugrundverhältnisse Hindernisse wie beispielsweise Gesteinsblöcke nicht immer erkannt werden, so dass gleichsam ein unterirdischer Vortrieb ins Ungewisse stattfindet. Dieser Umstand führt zu einem erheblichen Aufwand bei den Vortriebsarbeiten und häufig zu einer unzureichenden Qualität des erstellten unterirdischen Bauwerkes.

Außerdem sind aus der Praxis Maßnahmen bekannt, mit denen im Zuge des Vortriebs beim Tunnelbau die Bodeneigenschaften durch Ultraschallsondierung erkundet werden sollen. Dabei ist eine entsprechende Erkundungseinrichtung an der Vortriebsmaschine installiert. Die elektronische Ausrüstung einer solchen Vortriebsmaschine bewirkt aber elektromagnetische Störfelder, die die Auswertung der erkundeten Daten negativ beeinflussen. Außerdem ist dieses Verfahren außerordentlich kostspielig, weil die Messtechnik an die speziellen Verhältnisse beim Vortrieb, insbesondere an Erschütterungen und Vibrationen angepasst werden muss.

US 4128011 und US 4 380 930 offenbaren zusätzliche Verfahren zur Bestimmung von Bodeneigenschaften.

Demgegenüber liegt der Erfindung das technische Problem zugrunde, ein Verfahren der eingangs genannten Art anzugeben, mit dem eine präzise und funktionssichere und zugleich einfache Bestimmung der Bodeneigenschaften während des Vortriebs bei der Erstellung eines unterirdischen Bauwerkes möglich ist.

Zur Lösung dieses technischen Problems lehrt die Erfindung ein Verfahren zur Bestimmung von Bodeneigenschaften im Zuge der Erstellung von unterirdischen Bauwerken, insbesondere im Zuge der Erstellung von Tunnelröhren oder von Rohrvortrieben,
wobei zumindest ein Bohrloch in der Umgebung des zu erstellenden Bauwerkes in das Erdreich eingebracht wird und wobei von dem erbohrten Boden Bodenproben genommen werden,
wobei die Ausbreitungsgeschwindigkeit von Schallwellen in den Bodenproben ermittelt wird und als Vergleichsgeschwindigkeit für die spätere Auswertung bereit gehalten wird,
wobei in dem Bohrloch zumindest eine Empfangseinrichtung für den Empfang von Schallwellen angeordnet wird,
wobei mit einem Schallwellengenerator, der im Bereich des zu erstellenden Bauwerkes angeordnet wird Schallwellen erzeugt werden, so dass die Schallwellen den Boden bzw. das Erdreich durchdringen und von der Empfangseinrichtung empfangen werden können
und wobei die Ausbreitungsgeschwindigkeit der Schallwellen in dem Boden ermittelt wird und durch Vergleich mit der Vergleichsgeschwindigkeit die Bodeneigenschaften bestimmt werden.

Bei der Erzeugung eines Bohrloches wird also eine Bohrung mit Bohrkerngewinnung durchgeführt. Zweckmäßigerweise handelt es sich um relativ großkalibrige Erkundungsbohrungen. Die Bohrungen werden von der Erdoberfläche aus in das Erdreich eingebracht und zwar nach einer Ausführungsform der Erfindung senkrecht oder im Wesentlichen senkrecht zur Erdoberfläche. Grundsätzlich können aber auch schräge Bohrlöcher in das Erdreich eingebracht werden. Die Bohrlöcher werden im Vorfeld der Erstellung des unterirdischen Bauwerks hergestellt. Sie werden in den Bereichen in das Erdreich eingebracht, durch die sich später das unterirdische Bauwerk erstreckt. Es liegt im Rahmen der Erfindung, dass eine Mehrzahl von Bohrlöchern entlang des unterirdischen Bauwerkes in das Erdreich eingebracht wird. Mehrere Bohrlöcher werden also insbesondere entlang des zu erstellenden röhrenförmigen unterirdischen Bauwerkes eingebracht und zwar vorzugsweise neben diesem zu erstellenden röhrenförmigen unterirdischen Bauwerk.

Es liegt fernerhin im Rahmen der Erfindung, dass ein Bohrloch bis unterhalb des unterirdischen Bauwerkes eingebracht wird. Der Bohrlochgrund befindet sich dann also unterhalb der Sohle des unterirdischen Bauwerkes.

Im Rahmen des erfindungsgemäßen Verfahrens wird das Bohrloch bzw. werden die Bohrlöcher zweckmäßigerweise geodätisch vermessen und die Koordinaten der Bohrlöcher werden für die spätere Auswertung bereit gehalten. Vorzugsweise werden die Bohrlöcher geodätisch nach xyz-Koordinaten vermessen. Für die Auswertung bereithalten meint im Rahmen der Erfindung insbesondere, dass die Koordinaten der Bohrlöcher bzw. die Daten der Bohrlöcher in einem Zentralrechner abgespeichert werden.

Im Rahmen des erfindungsgemäßen Verfahrens werden die aus den Bohrlöchern stammenden Bodenproben untersucht und es wird die Bodeneigenschaft, insbesondere die Bodenart und/oder die Lagerungsdichte des Bodens und/oder die Festigkeit des Gesteins ermittelt. Vorzugsweise wird danach die Ausbreitungsgeschwindigkeit von Schallwellen in den jeweiligen Bodenproben gemessen. Es liegt im Rahmen der Erfindung, dass die für eine Bodenprobe ermittelte Ausbreitungsgeschwindigkeit der Schallwellen den jeweiligen Bodeneigenschaften, insbesondere der jeweiligen Bodenart und/oder der jeweiligen Lagerungsdichte des Bodens und/oder der Festigkeit des Gesteins zugeordnet wird und dass diese Zuordnung für die spätere Auswertung bereit gehalten wird. Zweckmäßigerweise verwendet man zur Messung der Ausbreitungsgeschwindigkeit Schallwellen definierter Frequenz. Vorzugsweise werden im Laborversuch den unterschiedlichen erbohrten Bodenproben bzw. den unterschiedlichen Bodeneigenschaften, insbesondere den Bodenarten und/oder Lagerungsdichten des Bodens und/oder der Festigkeit des Gesteins Wellenlaufgeschwindigkeiten der Schallwellen bzw. Ausbreitungsgeschwindigkeiten zugeordnet und in einer Auswertematrix abgelegt. Es liegt im Rahmen der Erfindung, dass die den unterschiedlichen Bodeneigenschaften, insbesondere den unterschiedlichen Bodenarten und/oder Lagerungsdichten und/oder Festigkeiten zugeordneten Ausbreitungsgeschwindigkeiten der Schallwellen in einem Zentralrechner abgespeichert werden.

Nach sehr bevorzugter Ausführungsform, der im Rahmen der Erfindung ganz besondere Bedeutung zukommt wird zumindest eine Empfangseinrichtung oberhalb des zu erstellenden Bauwerkes in einem Bohrloch und zumindest eine Empfangseinrichtung unterhalb des zu erstellenden Bauwerkes in diesem Bohrloch angeordnet. Zweckmäßigerweise wird jeweils eine Empfangseinrichtung oberhalb des zu erstellenden Bauwerkes und eine Empfangseinrichtung unterhalb des zu erstellenden Bauwerkes in dem Bohrloch vorgesehen. Mit den Empfangseinrichtungen wird die Ausbreitungsgeschwindigkeit der von dem Schallwellengenerator bzw. von den Schallwellengeneratoren erzeugten Schallwellen in dem Erdreich/Boden ermittelt bzw. gemessen.

Vorzugsweise wird ein Geophon als Empfangseinrichtung verwendet. Die Anordnung der Empfangseinrichtungen erfolgt zweckmäßigerweise kraftschlüssig gegen das anstehende Erdreich. Es liegt im Rahmen der Erfindung, dass die Empfangseinrichtungen so angeordnet bzw. fixiert werden, dass ein resonanzfreier Empfang von Schallwellen aus dem Baugrund bzw. aus dem Boden möglich ist. In diesem Zusammenhang werden bei verrohrten Bohrlöchern zweckmäßigerweise entsprechende Aussparungen im Bohrrohr mit speziellen Fixierungsverschlüssen für die Empfangseinrichtungen vorgesehen.

Es liegt weiterhin im Rahmen der Erfindung, dass die Position der Empfangseinrichtungen bestimmt wird und dass die Koordinaten der Empfangseinrichtungen für die Auswertung bereit gehalten werden. Dabei werden zweckmäßigerweise die xyz-Koordinaten bestimmt und für die Auswertung bereit gehalten. Für die Auswertung bereit halten meint auch hier im Rahmen der Erfindung insbesondere, dass die Koordinaten bzw. die Daten der Empfangseinrichtungen im einem Zentralrechner abgespeichert werden.

Nach einer Ausführungsform der Erfindung werden die Empfangseinrichtungen, vorzugsweise die Geophone an einen Sender angeschlossen, der die von den Empfangseinrichtungen übermittelten Daten drahtlos an den Zentralrechner sendet. Dabei sendet der Sender diese Daten zweckmäßigerweise über eine an der Erdoberfläche angeordnete Antenne an den Zentralrechner.

Es liegt im Rahmen der Erfindung, dass der Schallwellengenerator in einem bereits fertiggestellten Teil des unterirdischen Bauwerkes, insbesondere in einem bereits fertiggestellten Tunnelabschnitt bzw. Röhrenabschnitt angeordnet wird. Fertiggestellter Teil bzw. Abschnitt meint in diesem Zusammenhang, dass der entsprechende Hohlraum bereits aufgefahren bzw. hergestellt wurde. Weitere Ausbaumaßnahmen können natürlich auch zu einem späteren Zeitpunkt erfolgen. Der Schallwellengenerator bzw. die Schallwellengeneratoren senden Signale bzw. Schallwellen in den umgebenden Baugrund. Nach besonders bevorzugter Ausführungsform der Erfindung wird der Schallwellengenerator an einer Vortriebsmaschine in dem bereits fertiggestellten Teil des Bauwerkes bzw. des Tunnelabschnittes angeordnet. Zweckmäßigerweise werden Schallwellengeneratoren im Druckwandbereich hinter einem Abbauwerkzeug einer Vortriebsmaschine angeordnet. Dabei werden die Schallwellengeneratoren vorzugsweise an vier Stellen im Druckwandbereich hinter diesem Abbauwerkzeug vorgesehen. Die Schallwellengeneratoren sind bevorzugt in bestimmten Winkelabständen bezüglich einer Kreisbahn zueinander angeordnet. Die den vier Schallwellengeneratoren zugeordneten Winkel betragen dabei beispielsweise 45°, 135°, 225°und 315°. Bei den Schallwellengeneratoren handelt es sich zweckmäßigerweise um pneumatisch und mechanisch beaufschlagte Schallwellengeber. Nach besonders bevorzugter Ausführungsform der Erfindung üben diese Schallwellengeneratoren hammerschlagähnliche Impulse auf den Baugrund aus.

Nach besonders bevorzugter Ausführungsform der Erfindung werden Schallwellen hervorrufende Impulse in bestimmten Zeitabständen erzeugt. Die Schallwellengeneratoren bzw. Geber werden vorzugsweise mit der Maßgabe gesteuert, dass jeweils nur ein Schallwellengenerator sein Schallwellensignal aussendet und dass die Schallwellengeneratoren in bestimmten Zeitabständen nacheinander Schallwellen erzeugen. Zweckmäßigerweise sind die Schallwellengeneratoren an eine Steuer- und/oder Regeleinrichtung angeschlossen. Es liegt dabei im Rahmen der Erfindung, dass die Steuer- und/oder Regeleinrichtung mit dem Zentralrechner verbunden ist und Signale von dem Zentralrechner erhält und/oder Signale an den Zentralrechner sendet.

Es liegt weiterhin im Rahmen der Erfindung, dass die Position der Schallwellengeneratoren bestimmt wird und die Koordinaten der Schallwellengeneratoren für die Auswertung bereit gehalten werden. Vorzugsweise werden die xyz-Koordinaten der Schallwellengeneratoren bestimmt und für die Auswertung bereit gehalten. Für die Auswertung bereit halten meint auch hier vorzugsweise, dass die Koordinaten bzw. Daten der Schallwellengeneratoren in dem Zentralrechner abgespeichert werden.

Die von den Empfangseinrichtungen übermittelten Ausbreitungsgeschwindigkeiten der empfangenen Schallwellen werden mit den anhand der Bodenproben erhaltenen Vergleichsgeschwindigkeiten verglichen. Vorzugsweise werden die Ausbreitungsgeschwindigkeiten von den Empfangseinrichtungen an den Zentralrechner übermittelt und dort mit den abgespeicherten Vergleichsgeschwindigkeiten verglichen. Aufgrund dieses Vergleichs können Rückschlüsse auf die Bodeneigenschaften, insbesondere auf die Bodenart und/oder Lagerungsdichte des Bodens und/oder die Festigkeit des Gesteins gezogen werden. Mit Hilfe der im Zentralrechner abgespeicherten Koordinaten der Bohrlöcher und/oder Koordinaten der Empfangseinrichtungen und/oder Koordinaten der Schallwellengeneratoren können die Bodeneigenschaften auf einfache Weise einem bestimmten Bodenbereich zugeordnet werden. Man erhält Informationen über eventuelle Hindernisse wie Gesteinsblöcke oder Störzonen und dergleichen oder auch über Hohlräume im Erdreich. Auch sind Rückschlüsse auf die Durchlässigkeit des Bodens möglich. In Abhängigkeit von den erhaltenen Ergebnissen richtet man dann zweckmäßigerweise die Vortriebs- und Abbaumaßnahmen ein.

Der Erfindung liegt die Erkenntnis zugrunde, dass mit dem erfindungsgemäßen Verfahren auf relativ einfache Weise verlässliche Informationen über die Bodeneigenschaften bzw. über die Baugrundbeschaffenheit erhalten werden können. Aufgrund der vorausschauenden Kenntnis des Baugrundes können die Abbaumaßnahmen zielgerichtet eingestellt werden. Auf diese Weise kann sehr wirtschaftlich und kostengünstig gearbeitet werden. Außerdem erhält man mit Hilfe des erfindungsgemäßen Verfahrens im Vergleich zu den aus dem Stand der Technik bekannten Maßnahmen Bauwerke von besserer Qualität.

Nachfolgend wird die Erfindung anhand einer lediglich ein Ausführungsbeispiel darstellenden Zeichnung näher erläutert. Es zeigen in schematischer Darstellung:
- Fig. 1: eine Draufsicht auf einen Bereich, in dem das erfindungsgemäße Verfahren angewendet wird,
- Fig. 2: ein Funktionsschema zu dem erfindungsgemäßen Verfahren und
- Fig. 3: einen Teilschnitt gemäß Fig. 1.

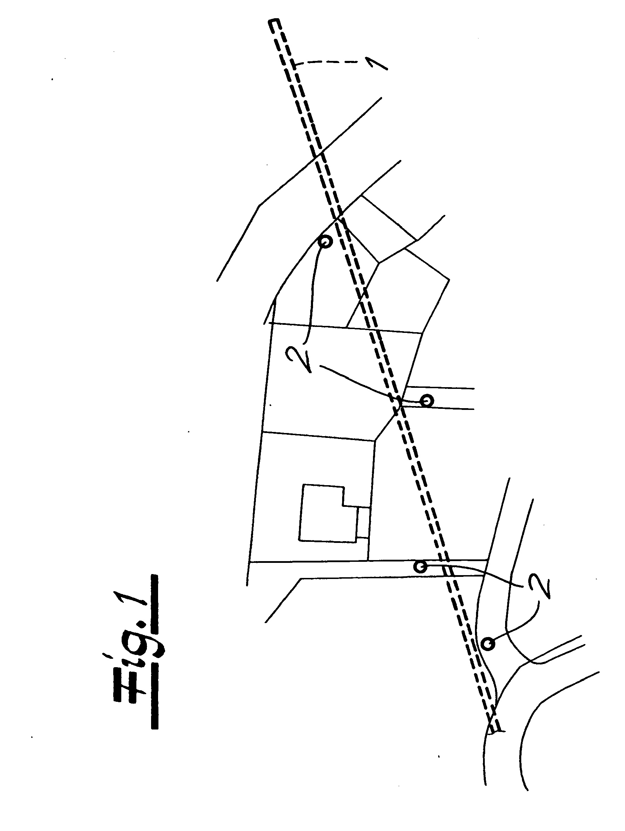

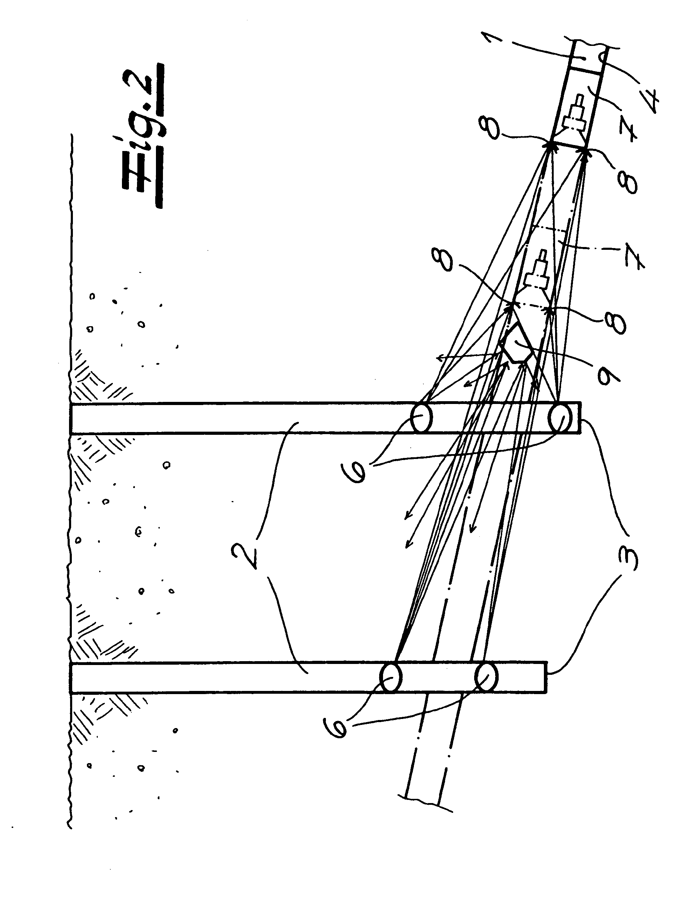

Die Erfindung betrifft ein Verfahren zur Bestimmung von Bodeneigenschaften im Zuge der Erstellung von unterirdischen Bauwerken. Vorzugsweise und im Ausführungsbeispiel handelt es sich bei dem unterirdischen Bauwerk um eine zu erstellende Tunnelröhre 1. Erfindungsgemäß wird eine Mehrzahl von Bohrlöchern 2 in der Umgebung der zu erstellenden Tunnelröhre 1 in das Erdreich eingebracht. In der Fig. 1 ist erkennbar, dass die Bohrlöcher 2 entlang der zu erstellenden Tunnelröhre 1 und neben der zu erstellenden Tunnelröhre 1 in das Erdreich eingebracht werden. Insbesondere die Fig. 2 zeigt, dass sich die Bohrlöcher 2 zweckmäßigerweise bis unterhalb der Tunnelröhre 1 erstrecken. Mit anderen Worten befindet sich der Bohrlochgrund 3 unterhalb der Sohle 4 der zu erstellenden Tunnelröhre 1.

Bei der Herstellung der Bohrlöcher 2 werden von dem erbohrten Boden Bodenproben genommen. Anschließend wird die Ausbreitungsgeschwindigkeit von Schallwellen in den Bodenproben ermittelt und als Vergleichsgeschwindigkeit für die Auswertung bereit gehalten. Die für jede Bodenprobe ermittelte Ausbreitungsgeschwindigkeit der Schallwellen wird den jeweiligen Bodeneigenschaften, insbesondere der jeweiligen Bodenart und/oder der jeweiligen Lagerungsdichte des Bodens und/oder der Festigkeit des Gesteins zugeordnet. Die auf diese Weise ermittelten Vergleichsgeschwindigkeiten werden in einem Zentralrechner 5 abgespeichert.

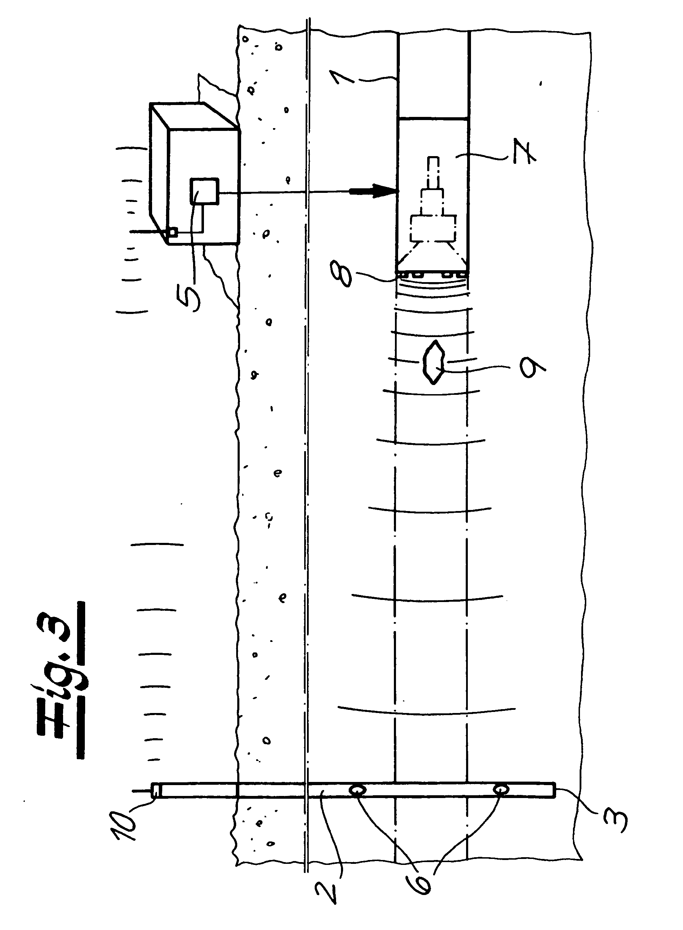

In die Bohrlöcher 2 werden Empfangseinrichtungen für Schallwellen, vorzugsweise und im Ausführungsbeispiel Geophone 6 eingebracht. In den Figuren 2 und 3 ist erkennbar, dass in den Bohrlöchern 2 jeweils ein Geophon 6 oberhalb der zu erstellenden Tunnelröhre 1 und jeweils ein Geophon 6 unterhalb der zu erstellenden Tunnelröhre 1 in dem betreffenden Bohrloch 2 angeordnet ist.

In den Figuren 2 und 3 erkennt man eine Vortriebsmaschine 7, mit der die Tunnelröhre 1 aufgefahren wird. Die Vortriebsmaschine 7 befindet sich in einem bereits erstellten Abschnitt der Tunnelröhre 1. Die Vortriebsmaschine 7 weist Schallwellengeneratoren 8 auf, mit denen Schallwellen erzeugt werden, die den Boden bzw. den Baugrund durchdringen und von den Geophonen 6 empfangen werden können. Mit den Geophonen 6 kann die Ausbreitungsgeschwindigkeit dieser Schallwellen ermittelt werden. In der Fig. 2 sind zwei verschiedene Stellungen der Vortriebsmaschine 7 dargestellt. Im Übrigen ist die Ausbreitung der Schallwellen durch Pfeile angedeutet worden. In dem noch zu erstellenden Tunnelröhrenabschnitt befindet sich ein Gesteinsblock 9 (Fig. 2), der naturgemäß ein Hindernis darstellt. Dieser Gesteinsblock 9 hat Einfluss auf die Ausbreitungsgeschwindigkeit der Schallwellen. Durch Messung der Ausbreitungsgeschwindigkeit können Rückschlüsse auf die Bodenbeschaffenheit und somit auch Hinweise auf den Gesteinsblock 9 erhalten werden.

In der Fig. 3 sind die wesentlichen Komponenten abgebildet, die für eine bevorzugte Ausführungsform des erfindungsgemäßen Verfahrens erforderlich sind. Schallwellen werden von an der Vortriebsmaschine 7 angeordneten Schallwellengeneratoren 8 erzeugt, so dass diese Schallwellen den Boden bzw. das Erdreich durchdringen. Die Ausbreitungsgeschwindigkeit der Schallwellen wird mit Hilfe der in dem Bohrloch 2 angeordneten Geophonen 6 gemessen. An der Erdoberfläche über dem Bohrloch 2 befindet sich ein Sender 10, mit dem die entsprechenden Daten bzw. die die Ausbreitungsgeschwindigkeit der Schallwellen betreffenden Daten drahtlos an den Zentralrechner 5 übermittelt werden. In dem Zentralrechner 5 werden die gemessenen Ausbreitungsgeschwindigkeiten der Schallwellen mit den Vergleichsgeschwindigkeiten verglichen, die mit Hilfe der Bodenproben aus den Bohrlöchern ermittelt wurden. Durch diesen Vergleich erhält man Informationen über die Bodenart und/oder die Lagerungsdichte des Bodens und/oder die Festigkeit des Gesteins. Diese Informationen werden dann bei den weiteren Vortriebsarbeiten verwendet. Mit anderen Worten werden die Vortriebsmaßnahmen an die Bodenbeschaffenheit angepasst, die mit Hilfe des erfindungsgemäßen Verfahrens ermittelt wurde.

## Patentansprüche

1. Verfahren zur Bestimmung von Bodeneigenschaften im Zuge der Erstellung von unterirdischen Bauwerken, insbesondere im Zuge der Erstellung von Tunnelröhren (1),
wobei von der Erdoberfläche aus eine Mehrzahl von Bohrlöchern (2) entlang des zu erstellenden Bauwerks bis unterhalb des Bauwerkes in das Erdreich eingebracht wird und wobei von dem erbohrten Boden Bodenproben genommen werden,
wobei die Ausbreitungsgeschwindigkeit von Schallwellen in den Bodenproben ermittelt wird und als Vergleichsgeschwindigkeit für die Auswertung bereit gehalten wird,
wobei in den Bohrlöchern (2) zumindest eine Empfangseinrichtung für den Empfang von Schallwellen angeordnet wird,
wobei mit zumindest einem Schallwellengenerator, der im Bereich des zu erstellenden Bauwerkes angeordnet wird Schallwellen erzeugt werden, so dass die Schallwellen den Boden durchdringen können und von der Empfangseinrichtung empfangen werden können,
und wobei die Ausbreitungsgeschwindigkeit der Schallwellen in dem Boden ermittelt wird und durch Vergleich mit der Vergleichsgeschwindigkeit die Bodeneigenschaften bestimmt werden.

2. Verfahren nach einem der Ansprüche 1, wobei das Bohrloch (2) bzw. die Bohrlöcher (2) geodätisch vermessen werden und die Koordinaten der Bohrlöcher (2) für die Auswertung bereit gehalten werden.

3. Verfahren nach einem der Ansprüche 1 bis 2, wobei die für eine Bodenprobe ermittelte Ausbreitungsgeschwindigkeit der Schallwellen den jeweiligen Bodeneigenschaften, insbesondere der jeweiligen Bodenart und/oder der Lagerungsdichte des Bodens und/oder der Festigkeit des Gesteins zugeordnet wird und diese Zuordnung für die Auswertung bereit gehalten wird.

4. Verfahren nach einem der Ansprüche 1 bis 3, wobei zumindest eine Empfangseinrichtung oberhalb des zu erstellenden Bauwerkes und zumindest eine Empfangseinrichtung unterhalb des zu erstellenden Bauwerkes in einem Bohrloch (2) angeordnet wird.

5. Verfahren nach einem der Ansprüche 1 bis 4, wobei die Position der Empfangseinrichtungen bestimmt und wobei die Koordinaten der Empfangseinrichtungen für die Auswertung bereit gehalten werden.

6. Verfahren nach einem der Ansprüche 1 bis 5, wobei der Schallwellengenerator (8) in einem bereits fertiggestellten Teil des unterirdischen Bauwerkes angeordnet wird.

7. Verfahren nach Anspruch 6, wobei der Schallwellengenerator (8) an einer Vortriebsmaschine (7) in dem bereits fertiggestellten Teil des Bauwerkes angeordnet wird.

8. Verfahren nach einem der Ansprüche 1 bis 7, wobei Schallwellen hervorrufende Impulse in bestimmten Zeitabständen erzeugt werden.

9. Verfahren nach einem der Ansprüche 1 bis 8, wobei die Position der Schallwellengeneratoren (8) bestimmt wird und wobei die Koordinaten der Schallwellengeneratoren (8) für die Auswertung bereit gehalten werden.

## Claims

1. Method for determining soil properties in the course of constructing underground structures, in particular in the course of constructing tunnels (1),
wherein a plurality of boreholes (2) are made in the ground along the structure to be constructed, from the earth's surface to below the structure, and wherein soil samples are taken from the bored soil,
wherein the propagation speed of sound waves in the soil samples is determined and is kept as a comparison speed for the evaluation,
wherein at least one receiving device for receiving sound waves is arranged in the boreholes (2),
wherein sound waves are generated by at least one sound wave generator which is arranged in the region of the structure to be constructed, so that the sound waves can pass through the soil and can be received by the receiving device,
and wherein the propagation speed of the sound waves in the soil is determined and the soil properties are determined through comparison with the comparison speed.

2. Method according to claim 1, wherein the borehole (2) or boreholes (2) are geodetically plotted and the coordinates of the boreholes (2) are kept for the evaluation.

3. Method according to one of claims 1 to 2, wherein the propagation speed of the sound waves which is determined for a soil sample is associated with the respective soil properties, in particular to the respective soil type and/or to the bulk density of the soil and/or to the strength of the rock, and this association is kept for the evaluation.

4. Method according to one of claims 1 to 3, wherein at least one receiving device is arranged above the structure to be constructed and at least one receiving device is arranged below the structure to be constructed, in a borehole (2).

5. Method according to one of claims 1 to 4, wherein the position of the receiving devices is determined, and wherein the coordinates of the receiving devices are kept for the evaluation.

6. Method according to one of claims 1 to 5, wherein the sound wave generator (8) is arranged in a part of the underground structure that has already been finished.

7. Method according to claim 6, wherein the sound wave generator (8) is arranged on a tunnelling machine (7) in the part of the structure that has already been finished.

8. Method according to one of claims 1 to 7, wherein pulses which give rise to sound waves are generated at defined time intervals.

9. Method according to one of claims 1 to 8, wherein the position of the sound wave generators (8) is determined, and wherein the coordinates of the sound wave generators (8) are kept for the evaluation.

## Revendications

1. Procédé servant à déterminer les propriétés du sol pendant la réalisation d'ouvrages souterrains, notamment pendant la réalisation de tubes de tunnels (1), consistant
à forer dans le sol, depuis la surface du sol et jusqu'en dessous de l'ouvrage à réaliser, plusieurs trous (2) le long de ce dernier, et à prélever des échantillons de sol dans les carottes ainsi obtenues,
à déterminer la vitesse de propagation d'ondes sonores dans les échantillons de sol et à la tenir disponible comme vitesse témoin pour l'analyse,
à placer dans les trous de forage (2) au moins un équipement récepteur des ondes sonores,
à générer des ondes sonores avec au moins un générateur placé dans la zone de l'ouvrage à réaliser afin que ces ondes puissent traverser le sol et puissent être captées par l'équipement récepteur,
la vitesse de propagation des ondes sonores dans le sol étant déterminée et les propriétés du sol étant définies par comparaison avec la vitesse témoin.

2. Procédé selon la revendication 1, consistant à soumettre le trou de forage (2) ou les trous de forage (2) à un arpentage géodésique et à tenir disponibles les coordonnées des trous de forage (2) en vue de l'analyse.

3. Procédé selon l'une quelconque des revendications 1 à 2, consistant à attribuer la vitesse de propagation des ondes sonores, déterminée pour un échantillon de sol, aux propriétés respectives de ce sol, en particulier au type respectif de sol et/ou à la densité des strates du sol et/ou à la dureté des roches, et à tenir cette correspondance disponible en vue de l'analyse.

4. Procédé selon l'une quelconque des revendications 1 à 3, consistant en ce qu'au moins un équipement récepteur situé au dessus de l'ouvrage à réaliser et au moins un équipement récepteur situé en dessous de l'ouvrage à réaliser sont disposés dans un trou de forage (2).

5. Procédé selon l'une quelconque des revendications 1 à 4, consistant à définir la position des équipements récepteurs et à tenir disponibles, pour l'analyse, les coordonnées desdits équipements récepteurs.

6. Procédé selon l'une quelconque des revendications 1 à 5, consistant à disposer le générateur d'ondes sonores (8) dans une partie déjà achevée de l'ouvrage souterrain.

7. Procédé selon la revendication 6, consistant à disposer le générateur d'ondes sonores (8) contre un tunnelier (7) dans la partie déjà achevée de l'ouvrage.

8. Procédé selon l'une quelconque des revendications 1 à 7, consistant à générer selon une périodicité définie des impulsions elles-mêmes à l'origine des ondes sonores.

9. Procédé selon l'une quelconque des revendications 1 à 8, consistant à déterminer la position des générateurs d'ondes sonores (8) et à tenir disponibles les coordonnées des générateurs d'ondes sonores (8) en vue de l'analyse.
